Europäisches Patentamt

European Patent Office

Office européen des brevets

(11) Veröffentlichungsnummer: **0 305 692 B1**

(19)

# EUROPÄISCHE PATENTSCHRIFT

(12)

(45) Veröffentlichungstag der Patentschrift: **06.05.92**

(21) Anmeldenummer: **88111174.4**

(22) Anmeldetag: **13.07.88**

(51) Int. Cl.5: **B29C 47/10**, B29C 47/40, B29C 47/50, B29C 47/72, B29C 47/82

(54) **Verfahren zur kontinuierlichen Herstellung von Kautschukmischungen und anderen füllstoffhaltigen Mischungen auf der Basis von Polymeren.**

(30) Priorität: **02.09.87 DE 3729237**
**02.09.87 DE 3729236**

(43) Veröffentlichungstag der Anmeldung:
**08.03.89 Patentblatt 89/10**

(45) Bekanntmachung des Hinweises auf die Patenterteilung:
**06.05.92 Patentblatt 92/19**

(84) Benannte Vertragsstaaten:
**AT CH DE FR GB IT LI NL SE**

(56) Entgegenhaltungen:
DE-A- 2 311 947     DE-B- 1 145 787
DE-U- 1 911 729     FR-A- 2 576 833
GB-A- 1 144 830     US-A- 2 871 516
US-A- 3 745 200     US-A- 4 629 327
US-A- 4 642 040

(73) Patentinhaber: **HERMANN BERSTORFF Maschinenbau GmbH**
**An der Breiten Wiese 3/5**
**W-3000 Hannover 61(DE)**

(72) Erfinder: **Räbiger, Norbert, Dr. Ing.**
**Meisenweg 8**
**W-5204 Lohmar 1(DE)**
Erfinder: **Dienst, Manfred, Dipl.-Ing.**
**Kastanieneck 2**
**W-3167 Burgdorf(DE)**

EP 0 305 692 B1

## Beschreibung

Es gibt bisher keine oder nur sehr begrenzt einsetzbare Verfahren, mit denen es gelingt, eine Kautschukmischung innerhalb eines kontinuierlichen Verfahrens herzustellen. Die Ursache hierfür liegt in der großen Anzahl der verschiedenen Komponenten sowie deren Dosiereigenschaften und Anlieferungsform begründet, aus der sich eine Kautschukmischung zusammensetzt. Aus diesem Grund ist derzeit nur ein auf die Verarbeitung von Pulverkautschuk begrenztes, kontinuierlich arbeitendes Verfahren (Buss-Verfahren) bekannt.

Bei diesem Verfahren werden die Komponenten an verschiedenen Stellen in einen Extruder eindosiert. Der hierbei verwendete Extruder ist ein Einschneckenextruder. Um die für einen Mischvorgang negative Fördereigenschaft und damit das Verweilzeitverhalten bei einer Schneckenförderung zu verbessern, wurden bei diesem Verfahren die Schneckenflanken durchbrochen und die Schnecke selbst führt eine Schwingbewegung in axialer Richtung aus. Damit können zwar die Schwankungen in der Dosierung und auch die örtlichen Anhäufungen von einzelnen Komponenten ausgeglichen werden, doch hat dies auch einen örtlich unterschiedlichen, volumenbezogenen Leistungseintrag zur Folge. Hierdurch werden eine ungleichmäßige Dispergierung des Rußes, ein schlechter Wärmeübergang und damit auch örtlich unterschiedliche Mischzustände im Material verursacht. Dieses wird noch überlagert durch die trotz der axialen Schneckenbewegung nicht ausreichende axiale Vermischung während des Mischprozesses, so daß Unterschiede im Mischzustand nicht ausgeglichen werden können. Aus diesen Grund, ist dieses Verfahren, besonders für Kautschukmischungen mit hohem Rußanteil und nicht pulverförmigem Kautschuk sowie für Naturkautschuk, nicht zu verwenden.

Auch durch die Verwendung anderer, in der Profilextrusion verwendeter Schneckenkonstruktionen, bei denen durch verschiedene geometrische Ausführungen und spezielle Hindernisse eine Umlagerung der einzelnen Fluidschichten erzielt wird, kann keine Verbesserung des oben beschriebenen Mischverfahrens erzielt werden. Derartige Sonderkonstruktionen erreichen keine entscheidende Veränderung in der Verweilzeitcharakteristik.

Zur Herstellung von Kautschukmischungen wurden deshalb bisher ausschließlich diskontinuierlich arbeitende Verfahren eingesetzt. Als die bekannteste Art der für diesen Prozeß verwendeten Maschinen, sind Innenmischer anzusehen. Die Polymermasse - und in bestimmten Zeitabständen auch die anderen Komponenten der Mischung - werden in den Innenmischer gegeben, in dem die Masse eine Zeitlang geknetet wird.

Aufgrund der Rotorgeometrie wird eine während des Knetvorganges ständig wechselnde Umverteilung und damit eine gleichbleibende Homogenisierung der Masser erreicht. Ein Nachteil ist das ungünstige Volumen-/Oberflüchenverhältnis und der hieraus resultierende schlechte Wärmeübergang. Die Folgen sind, z.B. beim Einarbeiten von Ruß, mehrere Mischvorgänge, da die Erwärmung der Masse zu groß ist und hierdurch der Ruß nicht in einem Arbeitsgang eingearbeitet werden kann.

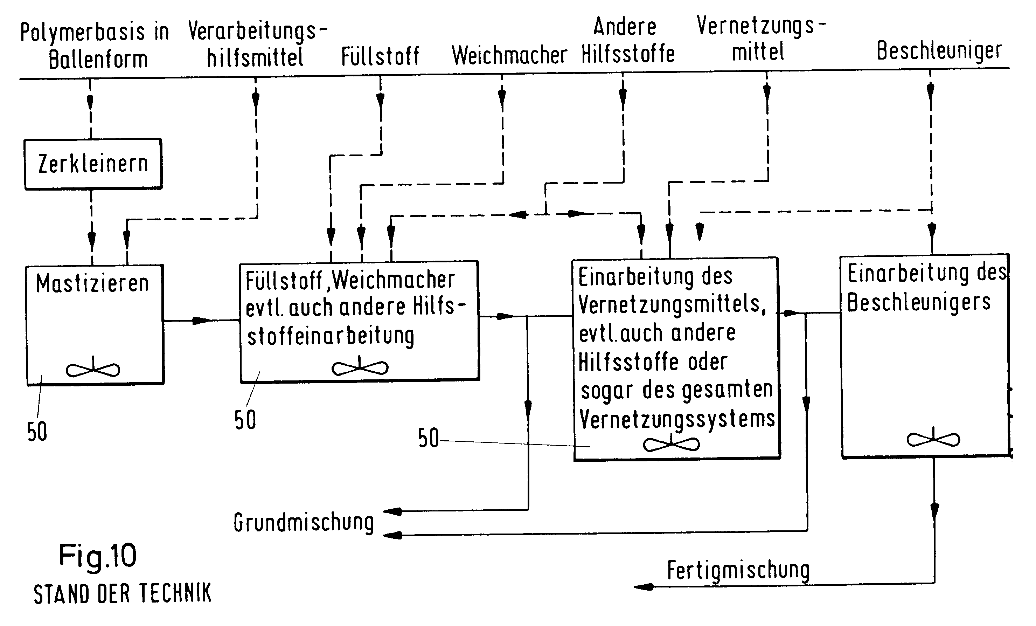

In Fig. 10 wird ein Verfahrensfließbild gemäß dem Stand der Technik gezeigt.

In diesem Beispiel erfolgt das Mastizieren innerhalb eines instationären Prozesses im Innenmischer (50), wobei sich aufgrund der kontinuierlich ansteigenden Temperaturen ständig wechselnde Verhältnisse und ein sich änderndes Mastizierverhalten einstellt.

Die Einarbeitung des Füllstoffes, der Weichmacher und der Hilfsstoffe erfolgt nach Abschluß der Mastifikation innerhalb desselben instationären Prozesses, während die Einarbeitung des Vernetzungsmittels und anderer Hilfsstoffe nach der Abkühlung des Batches in einem weiteren instationären Mischvorgang in einem weiteren Innenmischer erfolgt. Der Beschleuniger wird bei einer sehr schnell reagierenden Fertigmischung innerhalb eines weiteren Mischungsvorganges bei möglichst geringer Temperatur zugegeben.

Nach dem derzeitigen Stand der Technik werden Kautschukmischungen ausschließlich innerhalb von instationären Prozessen im Innenmischer hergestellt. Im vorliegenden Beispiel wird von einer Naturkautschukmischung ausgegangen. Nach einer entsprechenden Zerkleinerung wird der Naturkautschuk im Innenmischer (50) mastiziert und so für die Aufnahme der anderen Mischungsbestandteile vorbereitet.

Der Mischprozeß im Innenmischer, der ein Rührkesselverhalten aufweist, verursacht hierbei eine kontinuierlich ansteigende Temperatur, wodurch sich ständig wechselnde Verhältnisse einstellen und ein sich stetig änderndes Mastizierverhalten erfolgt.

Außerdem treten aufgrund des nicht vorteilhaften Mischverhaltens sowie der schlechten Wärmeabfuhr umfangreiche Temperaturunterschiede in der Masse auf, so daß dieser Prozeß nicht oder nur sehr umständlich hinsichtlich der Temperatur steuerbar ist.

Die Einarbeitung des Füllstoffes und des Weichmachers, evtl. auch von Hilfsstoffen, erfolgt nach Abschluß der Mastifikation innerhalb desselben instationären Prozesses. Hierzu wird dem Batch die gesamte, oder bei hohem Füllstoffgehalt ein Teil des Füllstoffes und die gesamte Weichmachermenge zudosiert.

Die ständige Umverteilung im Innenmischer und die jetzt stärker ansteigende Temperature bewirken die Zukorporation des Füllstoffes und anschließend das Dispergieren der Füllstoffagglomerate. Da der Dispergiervorgang mit ansteigender Temperatur schlechter wird, und die Temperatur mit zunehmendem Füllstoffanteil immer schneller ansteigt, kann aufgrund des schlechten Wärmeübergangs im Innenmischer die Temperatur nicht konstant gehalten werden, wodurch nur eine begrenzte Füllstoffmenge pro Batch eingearbeitet werden kann.

Die Folge ist, daß bei größeren und den nicht selten hohen Füllstoffgehalten der Batch nach der entsprechenden Abkühlung in einem erneuten instationären Mischprozeß im Innenmischer verarbeitet, wobei dann die restliche Füllstoffmenge eingearbeitet werden muß. Vielfach sind vier bis fünf Mischprozesse zur Füllstoffeinarbeitung notwendig, damit eine Grundmischung der erforderlichen Qualität hergestellt werden kann. Der fertiggestellte Batch wird anschließend gewalzt und zur Weiterverarbeitung in Streifen- oder Partikelform gelagert.

Die Einarbeitung des Vernetzungssystems erfolgt in einem weiteren instationären Prozeß im Innenmischer, wobei die Temperatur entsprechend der Reaktionsgeschwindigkeit einen entsprechenden Grenzwert nicht übersteigen darf.

Auf diese Tatsache kann bei besonders schnellen Reaktionen zu mehreren Mischprozessen führen, da unbedingt die Komponenten des Vernetzungssystems gleichmäßig im Batch verteilt und homogenisiert werden müssen, wodurch die Temperatur im schädlicher Weise schnell ansteigt.

Die Herstellung einer Kautschukmischung nach dem derzeitigen Stand der Technik kann aus diesem Grunde bis zu sieben oder acht Mischprozesse bedeuten, woraus eine hierfür notwendige hohe Lagerkapazität und ein umfangreicher maschineller und personeller Aufwand resultiert.

Für die kontinuierliche Herstellung einer Kautschukmischung muß ein Verfahren folgender Forderungen erfüllen:

- Hintereinanderschaltung mehrerer kontinuierlich arbeitender Einzelprozesse, wie z.B. Mastizieren, Einarbeitung von Ruß, Öl und anderen Hilfsstoffen sowie die Einmischung des Vernetzungssystems.
- Hohes Oberflächen-/Volumenverhältnis.
- Gleichmäßige Verteilung des volumenbezogenen Leistungseintrags durch die Einstellung einer möglichst konstanten, definierten Scherbelastung.
- Zwangsförderung der Masse mit umfangreicher radialer Misch- und Dispergierwirkung.

- Zum Ausgleich der auf die Dosierung, die Misch- und Dispergierwirkung zurückzuführenden, örtlich auftretenden Inhomogenitäten, muß jeder Prozeßschritt das Verweilzeitverhalten eines Rührkessels aufweisen.
- Gute Regelbarkeit zur Qualitätssicherung.
- Sehr gute Wärmeübergangsverhältnisse zur Aufrechterhaltung einer nach jedem Prozeßschritt möglichst gleichbleibenden Verarbeitungstemperatur.

Aus der US-PS 3,745,200 ist ein erster Extruder bekannt, mit einer hinter der Meteringzone angeordneten Öffnung, an die ein Kanal angeschlossen ist, der in einen zweiten Extruder führt. Dieser Extruder fördert das Material entgegen der Förderrichtung des ersten Extruders. Das Ende des zweiten Extruders wird durch einen Kanal mit der Einfüllöffnung des ersten Extruders verbunden, so daß das Material in den ersten Extruder zurückgefördert wird.

Diese Einrichtung wurde geschaffen, um Druck- und Temperaturschwankungen (Spalte 2, Zeilen 1 - 30) des ersten Extruders auszugleichen.

Bei der Bildung des Oberbegriffs wird von dieser Entgegenhaltung ausgegangen.

Es ist die Aufgabe der vorliegenden Erfindung, ein kontinuierlich arbeitendes Herstellungsverfahren für eine homogene Kautschukgrundmischung aufzuzeigen, welches obigen Forderungen genügt. Im Verlauf dieser kontinuierlichen Grundmischungsherstellung soll dabei der gesamte erforderliche Rußanteil in einem Arbeitsgang eingearbeitet werden.

Die Verfahrensschritte:
- Mastizieren des Kautschuks,
- Einarbeiten des Füllstoffanteils,
- Einmischen der Vernetzungsmittel
sollen in einer Maschine durchgeführt werden.

Insbesondere soll ein großes Verhältnis der die Mischung verarbeitenden Maschinenoberfläche zum Kautschukmischungsvolumen geschaffen werden, um bessere Wärmeübergangsverhältnisse zu schaffen.

Weiterhin ist es die Aufgabe, eine Einrichtung zur Durchführung des Verfahrens aufzuzeigen, wobei insbesondere eine reduzierte Scherenergieeinleitung erreicht werden soll, bei gleichzeitiger guter Längsmischung des Compounds.

Die sich im Rück- bzw. im Umlauf befindliche Kautschukmischung soll gleichzeitig besser vermischt und homogenisiert werden, ohne daß eine wesentliche Erhöhung des Massedruckes in dem Rücklaufsystem, insbesondere in dem zylindermantelförmigen Ringspalt stattfindet.

Die Aufgabe wird durch die in den Patentansprüchen niedergelegten Merkmale gelöst.

Bei ZE-Extrusionsverfahren werden ca. 60 % der Energie in derEinzugszone umgesetzt, wodurch in diesem Bereich der größte Teil der Erwärmung stattfindet. Bei der Rußeinarbeitung bedeutet dieses, daß der Ruß vorzugsweise nach der in der ersten Stufe durchgeführten Mastikation, in einer direkt damit verbundenen zweiten Stufe (in ca. 5 D der Schneckenlänge vom Eintritt des mastizierten Kautschuks) zugegeben werden sollte. Die vorherige Mastizierung oder Erwärmung der Polymerbasis hat eine schnelle Rußinkorporation zur Folge.

In dem folgenden Schneckenabschnitt wird der Ruß inkorporiert und bereits mit der Dispergierung der Agglomerate begonnen.

Um einen besseren Ausgleich der Schwankungen in der Dosierung und der örtlichen Inhomogenitäten zu erreichen, wird nach etwa 4 D stromabwärts der zweiten Einspeiseöffnung der Förderstrom mit dem wesentlich größeren, stromaufwärts über die radialen Rückführungskanäle und dem zylindermantelförmigen Ringraum zurückströmenden Massestrom vermischt. Dieser Rückförderstrom wird vom Massestrom und der Schneckenspitze entnommen und zurückgeführt und somit dem zwischen dem Aus- und Eintritt der Rückführung stattfindenden Dispergiervorgang erneut zugeführt.

Eine derartige Vermischung hat die Einstellung eines Rührkesselverhaltens zur Folge, so daß das bei der Extrusion fehlende Längsvermischungsverhalten ausgeglichen und eine definierte Dispergierung des Rußes oder anderer Teilstoffe eingestellt werden kann.

Ein weiteres wichtiges Merkmal hinsichtlich der wiederholten Rückführung ist die intensive Kühlung des Förderstromes in dem zylindermantelförmigen Raum, die zur Korrektur einer ansteigenden Verarbeitungstemperatur sehr vorteilhaft ist. Die Kühlung führt dazu, daß die bis zur Rückführungsstelle erreichte Temperatur abgesenkt wird, was zur Folge hat, daß das Mastizieren und das Dispergieren des Rußes verbessert wird. Mit abnehmender Temperatur steigt die Viskosität an, wodurch die Einleitung höherer Schubspannungen in die Masse begünstigt wird. Nachdem der Ruß inkorporiert ist, wird hierdurch die Dispergierwirkung entscheidend verbessert.

Die Rückführung der Masse erfolgt in einen zylindermantelförmigen Ringspalt, so daß ein hohes Oberflächen-/Volumenverhältnis eingestellt werden kann.

Durch die Ausbildung des Mundestückes der Verbindungsleitung zwischen den Stufen als Rohr oder der Anordnung eines Einschneckenextruders als Rückführungsraum mit Kapillare als Verbindungselemente und vorgesehenen Kapillarviskosimetern, wird erstmals auch das Mastizieren von Naturkautschuk regelbar, denn eine Veränderung in der Viskosität kann sofort ermittelt und durch eine gleichzeitige Veränderung der Schnekkendrehzahl und des freien Querschnittes der Austrittöffnung (eine verstellbare Blende zur Aufrechterhaltung des Fördervolumenstroms) ausgeglichen werden. Die mit zunehmender Drehzahl erhöhte Förderleistung wird dann durch eine Steigerung im Rücklauf kompensiert.

Der gute, durch die höhere Strömungsgeschwindigkeit verbesserte Wärmeübergang innerhalb der Rückführung führt somit zur Konstanthaltung der Verarbeitungstemperatur.

Das erfindungsgemäße Verfahren bietet folgender Vorteile:

- Es wird ein kontinuierliches Verfahren geschaffen.
- Erstmals wird eine Steuerung und Regelung sowie on-line-Messung der Viskosität bei dem Mastizieren von Naturkautschuk möglich.
- Die Kautschukmischung wird gering thermisch belastet.
- Es wird eine sehr hohe Homogenität aufgrund des Rührkesselverhaltens erreicht.
- Der massebezogene Leistungsaufwand wird verringert.
- Eine Zwischenlagerung der Kautschukmischung während der Herstellung wird vermieden.

Bei einer Einrichtung, die ausgehend von einem Zweischneckenextruder mit zwei, stromabwärts mit einem Abstand bis 10 D (D = Schneckendurchmesser) hintereinander angeordnete Einspeisetrichter (für Kautschuk und den Füllenstoff (Ruß)) aufweist, wird die Austrittsöffnung soweit verschlossen, daß ein relativ hoher Druck im Austrittsbereich des ZE-Extrusionsraumes (Zweischnecken-Extrusionsraum) auftritt.

Durch den so erzeugten Materialdruck wird der mit dem Füllstoff vermischte Kautschuk in ein Rückführungskanalsystem gepreßt. Das Rückführungskanalsystem besteht aus radial von dem ZE-Extrusionsraum geführten Kanälen, die in einen koaxial um das Gehäuse des ZE angeordneten zylindermantelförmigen Ringspalt bzw. Rückführungsraum münden.

Dieser Ringspalt wird über eine bestimmte, vom Grad der Mischung abhängig zu machenden Länge, koaxial außen aum den ZE herum zurückgeführt.

Der Rückführungsraum ist an seinem stromaufwärtigen Ende über radial wieder zum ZE-Extrusionsraum zurückgeführten Kanälen mit diesem verbunden, so daß sich aufgrund dieser Konstruktion ein Materialrückfluß bzw. ein Umlauf ergibt, wobei der Rückfluß stromaufwärts in den ZE-Extrusionsraum geführt wird und sich mit dem eingespeisten Materialstrom im ZE-Raum wieder vermischt.

Dieser Vorgang kann beliebig oft wiederholt werden, jeweils in Abhängigkeit der Größe des freien Querschnittes der Austrittsöffnung des ZE und des Extrusionsdruckes, wobei für ein gutes Mischverhältnis nach Art eines Rührkesselverhaltens etwa 10 % der Mischung ausgestoßen und 90 % sich im Rückfluß bzw. Umlauf, d. h. in den radialen Zuführ- und Rückführkanälen und in dem zylindermantelförmigen Ringspalt, befinden.

Der zylindermantelförmige Ringspalt wird gekühlt, um die durch den Extrusionsförderdruck in die Kautschukmischung eingeleitete Scherenergie zu kontrollieren, die zwar für eine hervorragende Längsmischung sorgt, aber auch zu einer Temperaturerhöhung der Kautschukmischung führt.

Die Kühlung erfolgt durch im Gehäuse de ZE's eingebrachte axiale Kühlenbohrungen oder auch durch axiale Bohrungen in dem Zylindermantel, an die eine Umlauf ermöglichende Temperiergeräte angeschlossen sind.

Es wird auf der einen Seite Scherenergie eingeleitet, um eine bessere Längsmischung der sehr temperaturempfindlichen Kautschukmischung zu erhalten, auf der anderen Seite muß durch eine intensive und sehr viel Energie vernichtende Kühlung sichergestellt werden, daß die engen Temperaturbelastungsgrenzen der Kautschukmischung nicht überschritten werden.

Durch die drehbare Ausbildung des Zylindermantels, in dem in der Innenfläche Nuten eingebracht sind, wird ein Fördereffekt erzielt, wodurch der Extrusionsdruck in dem Rück- bzw. Umlaufsystem wesentlich gesenkt wird, bei gleichbleibender Umlaufzeit der Kautschukmischung.

Die Unterstützung des Rückflusses der Mischung in dem Ringraum, durch die Drehung des eine Förderwirkung aufweisenden Zylindermantels, verhindert insbesondere einen schädlichen Temperaturanstieg der Mischung, wodurch die Kühlleistung in diesem Bereich gesenkt werden kann.

Der Umlauf kann darüber hinaus hinsichtlich seiner Zeit gesteuert werden, d.h. gezielt verzögert oder auch beschleunigt werden, ohne daß hierfür die Drehzahl der Doppelschnecken verändert werden muß.

Es wird ein zusätzlicher Misch- und Homogenisiereffekt erzielt, ohne daß durch eine Druckerhöhung im Umlaufsystem weitere Scherenergie in die Kautschukmischung eingeleitet werden muß.

Durch die Gestaltung der wendelförmigen Nuten im drehbaren Zylindermantel, d.h. hinsichtlich
ihrer Steigung,
ihres Querschnittes und
ihrer Tiefer,
kann gezielt auf die Fördergeschwindigkeit eingewirkt werden, wobei insbesondere durch die Steuerung der Umfangsgeschwindigkeit des Zylindermantels ein bestimmter Misch- und Homogenisiergrad der Kautschukmischung eingestellt werden kann.

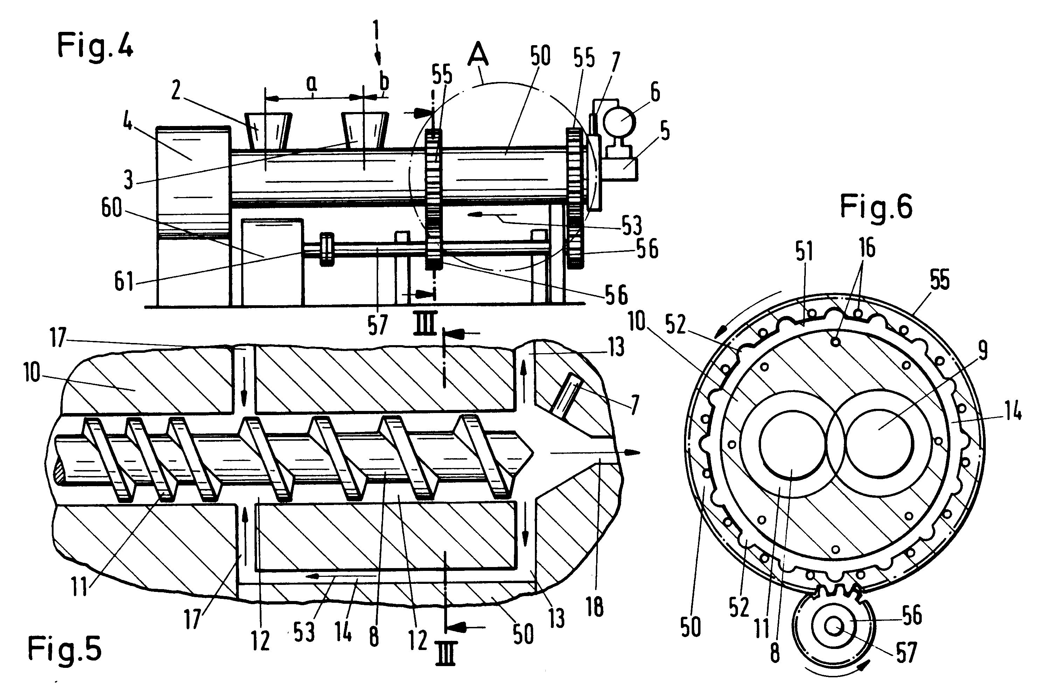

Ausführungsbeispiele der Erfindung werden anhand der Zeichnungen erläutert. Das in Fig. 4 gezeigte, ist ein bevorzugtes Ausführungsbeispiel.

Es zeigen:

| | |
|---|---|
| Fig. 1 | einen Längsschnitt durch eine schematisiert dargestellte Extrusionsanlage. |
| Fig. 2 | eine Vergrößerung des Ausschnittes "A" in Fig. 1. |
| Fig. 3 | einen Querschnitt gemäß Linie III-III in Fig. 2. |
| Fig. 4 | einen Längsschnitt durch eine weitere Ausführungsform ähnlich der Fig. 1. |
| Fig. 5 | einen Detailausschnitt aus Fig. 4. |
| Fig. 6 | einen Querschnitt gemäß Linie III-III in Fig. 4 bzw. 5. |
| Fig. 7 | eine Abwicklung der Innenfläche des Zylindermantels. |
| Fig. 8 | eine Draufsicht auf eine andere Ausführungsform einer Anlage zur Durchführung des Verfahrens. |
| Fig. 9 | eine weitere Ausführungsform für die Durchführung des erfindungsgemäßen Verfahrens. |
| Fig. 10 | ein schematisiertes Verfahrensfließbild, welches das Verfahren gemäß dem Stand der Technik darstellt. |
| Fig. 11 | eine weitere Ausführungsform ähnlich der in Fig. 2 und 5 gezeigten, jedoch mit anderen Schnecken. |

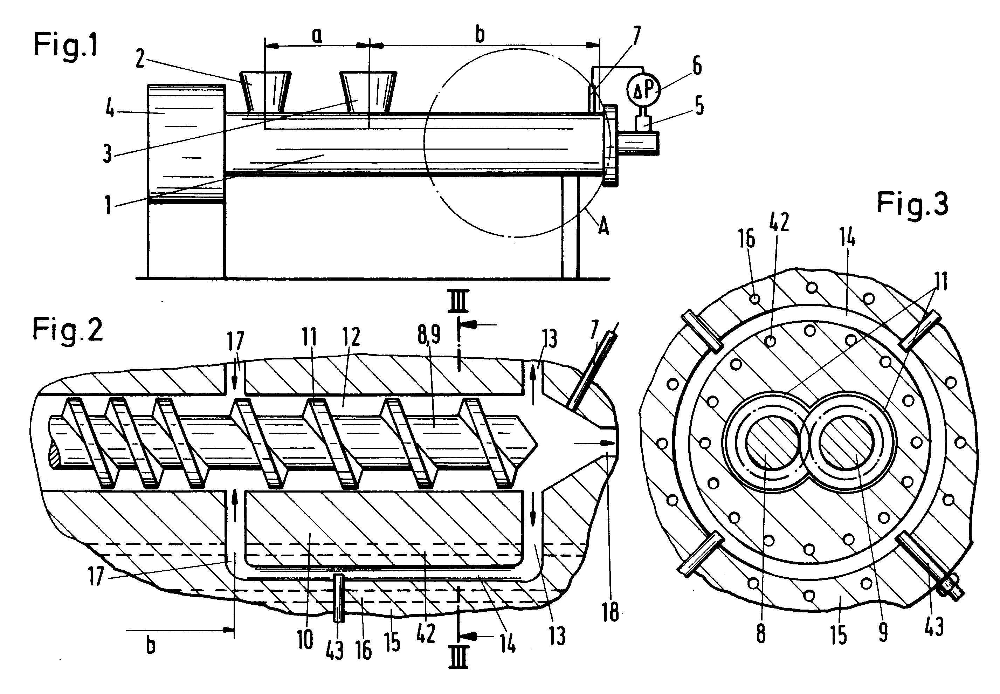

In Fig. 1 wird ein ZE (Zweischneckenextruder) 1 gezeigt mit einem Antrieb und Getriebe 4, mit zwei Materialeinfülltrichtern 2 und 3, die in einem Abstand "a" voneinander angeordnet sind.

Am Ausgang des ZE's ist eine, den freien Querschnitt der Austrittsöffnung steuernde, bekannte und dem Fachmann geläufige Blende 5 angeordnet, die mit einem Regelgerät 6 verbunden ist und aufgrund gemessener Druckwerte des vor der Austrittsöffnung angeordneten Druckmeßgerätes 7 gesteuert wird.

Der ZE weist zwei miteinander kämmende Schnecken 8 und 9 auf, die in dem Gehäuse 10 rotieren und aufgrund der wendelförmigen Schnekkenstege 11 das eingegebene Material fast vollständig weiterfördern. Der ZE hat eine Zwangsförderung und Selbstreinigung, weil sich die Stegrükken 11 gegenseitig während ihrer Rotation abstreichen und gleichzeitig in geringem Abstand an der Gehäuseinnenwandung entlangstreichen.

Von dem ZE-Extrusionsraum 12 aus führen Rückführungskanäle oder Schlitze 13 zu dem zylindermantelförmigen Ringspalt 14, der von dem Mantel 15 umgeben ist. In Mantel 10 und 15 sind axiale Kühlbohrungen 16 und 42 eingebracht, um den Mantel auf eine bestimmte Temperatur einstellen zu können. An Bohrungen 16 ist ein bekanntes und nicht im Detail gezeigtes Temperieraggregat angeschlossen.

Der zylindermantelförmige Ringspalt 14 ist stromaufwärts über Rückführungskanäle oder Schlitze 17 mit der Eingangsseite des ZE-Extrusionsraumes 12 verbunden, zwischen denen die innenliegenden Kühlborungen 42 angeordnet sind.

In Einfülltrichter 2 wird zerkleinerter Kautschuk mittels nicht gezeigter Dosiereinrichtung eingegeben, von den Schnecken 8 und 9 erfaßt und in dem ersten Schneckenabschnitt "a" mastiziert. Gleichzeitig werden in den ersten Einfülltrichter 2 Verarbeitungshilfsmittel mit eingegeben.

In Einfülltrichter 3 werden in den bereits mastizierten und durch die Einleitung von Scherenergie auf ca. 60 - 80 °C aufgewärmten Kautschuk der Füllstoff, d.h. der Ruß, eingearbeitet. Weiterhin werden die erforderlichen Weichmacheranteile und andere Verarbeitungshilfsstoffe in den Trichter 3 eindosiert.

Vom Trichter 3 bis zum ersten Rückführungskanal 17 wird der Abstand "b" belassen, der nicht kürzer als 4 D (D = Schneckendurchmesser) sein darf, um eine ausreichende Einarbeitung der in Trichter 3 einsodierten Bestandteile sicherzustellen, bevor die erste Vermischung mit dem durch Kanäle 17 rückgeführten Materialstrom stattfindet.

Dieser Materialstrom kann einen Anteil bis zu 1/20 des Gesamtvolumenstromes im Extrusionsraum 12 aufweisen, wodurch eine definierte und steuerbare Einarbeitung der Stoffe möglich wird.

Das Druckmeßgerät 7 mißt etwa vor der Austrittsöffnung 18 den Druck und steuert aufgrund dessen die Größe des freien Durchtrittsquerschnittes der Öffnung 18 über ein mit einer Blende 5 verbundenes Regelgerät 6, so daß eine beliebige Einstellung der durch den Ringspalt 14 zurückfließenden Materialmenge eingestellt werden kann. Je nach gewünschter Endhomogenität kann das Material so oft durch den Ringspalt gepreßt werden, bis eine aureichende Homogenität vorliegt, wobei jeweils bis zu einem Zwanzigstel vom Gesamtmaschinenraumvolumen der Mischung abgegeben wird.

Während des Durchlaufs durch den Ringspalt erfolgt eine intensive Kühlung der Mischung durch die Kühlkanäle 16 in dem Gehäuse und den Kühlborungen 42 im Zylinder 10, so daß auch bei mehrmaliger Zirkulation der Mischung keine thermische Belastung auftreten kann. Dieser Umstand ist insbesondere deswegen von großer Bedeutung, weil mittels der erfindungsgemäßen Einrichtung ein großes Kühlflächen/Material-Volumenverhältnis geschaffen wird, was bisher mit keiner bekannten Einrichtung darstellbar ist.

Eine weitere Ausführungsform der Erfindung wird in den Fig. 4 bis 7 gezeigt.

Die durch die radialen Kanäle 13 in den Ringspalt 14 gelangende Kautschukmischung wird von dem rotierenden Mantel 50 erfaßt und weitergefördert.

Der Mantel 50 wird durch die beiden Ritzel 56, die in eine Außenverzahnung 55 des Mantels 50 eingreifen, in Drehbewegung gesetzt.

Die Welle 57, auf der die Antriebsritzel 56 angeordnet sind, ist durch die Abtriebswelle 61 des Getriebes 60 stufenlos hinsichtlich ihrer Drehzahl verstellbar. Außerdem ist das Getriebe 60 so gestaltet, daß auch eine Drehrichtungsumkehr durchführbar ist, um individuell auf den jeweilig gewünschten Homogenisierungsgrad der Kautschukmischung eingehen zu können.

In dem Mantel 50 sind die Nuten eingebracht, die entweder als runde halbkreisförmige Nuten oder auch als rechteckige Nuten ausgebildet sein können.

Die Nuten sind wendelförmig in der Innenfläche 61 des Mantels 50 eingefräst und weisen eine Steigung auf, die je nach gewünschter Fördergeschwindigkeit in einem Winkel 54 von 0 - 90° angeordnet sind.

Je kleiner der Steigungswinkel gewählt wird, um so geringer ist die Fördergeschwindigkeit bei gleichbleibender Nutentiefe und Umfangsgeschwindigkeit des Mantels 50.

Wenn axiale (nicht in der Zeichnung dargestellte) Nuten, also eine etwa 90°-Anordnung der Nuten gewählt wird, kann die Umfangsgeschwindigkeit des Mantels sehr stark gesenkt werden, wobei dann eine sehr intensive Quermischung der Kautschukmischung durchführbar ist, je nach Drehzahl des Mantels 50. In einem solchen Fall muß der Förderdruck fast ausschl. durch den Extrusionsdruck des Doppelschneckenextruders aufgebracht werden.

Durch die Drehzahlumkehr des Mantels 50, durch eine Umsteuerung des Getriebes 60 bei gleichbleibendem Steigungswinkel der Nuten 52, kann bei sehr geringer Manteldrehzahl gezielt in hohem Maß Scherenergie in die Kautschukmishung eingeleitet werden, was für bestimmte, höher temperaturstabilisierte Kautschukmischungen von großer Bedeutung sein kann.

Der Mantel 50 und das Gehäuse des ZE's wird durch die axialen Kühlbohrungen 16, an die ein nicht gezeigtes und dem Fachmann bekanntes Temperieraggregat angeschlossen ist, gezielt temperiert, um bestimmte Temperaturgrenzen nicht zu überschreiten.

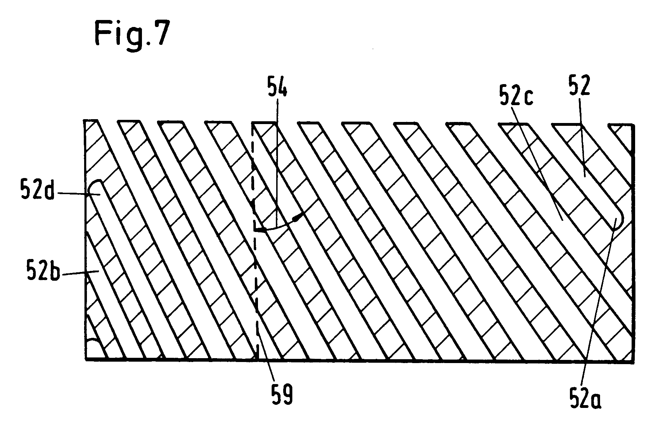

Durch die Ausbildung der Nuten 52 - wie gezeigt in Fig. 7 -als eingangsseitig geschlossen 52 a und ausgangsseitig geöffnet 52b, bzw. bei der benachbarten Nut in umgekehrter Weise, wird erreicht, daß alle Materialteilchen einmal über einen Steg zwischen den Nuten 52 geschert werden, bevor sie durch die Rückführungskanäle 17 in den ZE-Extrusionsraum 12 zurückgeführt werden.

Es wird eine sehr schnelle Homogenisierung der Kautschukmischung erreicht, wobei es in einigen Fällen zweckmäßig sein kann, den drehbaren Zylindermantel 50 und auch das ZE-Gehäuse zu kühlen.

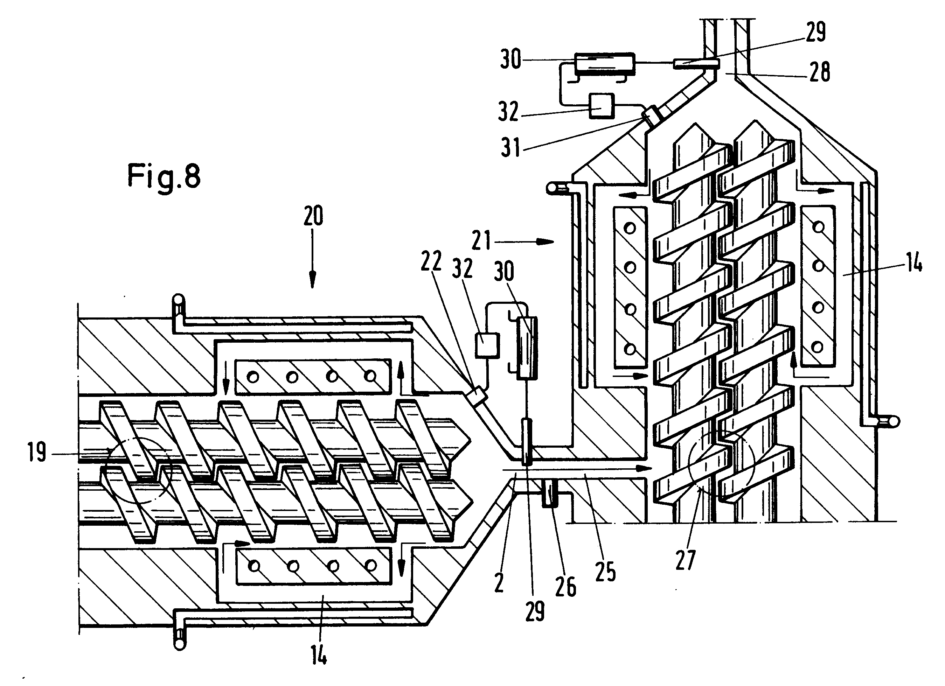

Bei den meisten Mischungen wird zunächst nur ein Mastiziervorgang des Kautschuks durchgeführt, so daß eine Einrichtung gewählt werden kann, wie gezeigt in Fig. 8. In den Trichter 19 des ersten ZE 20 wird der Kautschuk als Pellets und die evtl. notwendig werdenden Verarbeitungshilfsmittel eingegeben.

Die Mastikation erfolgt dabei wie in Verbindung mit der in Fig. 1 und 2 beschriebenen Verfahrensweise. Es wird der Druck durch das Meßgerät 22 (Fig. 8) festgestellt und aufgrund dessen steuert das mit dem Gerät 22 verbundene Regelgerät 32 die Austrittsöffnung 25.

Die Mischung gelangt dann durch das Kapillar 25, in den ein Kapillarviskosimeter 26 (Messung des axialen Druckgradienten) eingebaut wird, in den ZE 21. Durch die Anordnung eines Kapillarviskosimeters wird auch das Mastizieren von Naturkautschuk regelbar, denn eine Veränderung in der Viskosität wird sofort ermittelt und durch eine gleichzeitige Veränderung der Schneckendrehzahl und der Austrittsöffnung 24 (durch die verstellbare Blender 29 zur Aufrechterhaltung des Fördervolumenstromes) ausgeglichen.

Die mit zunehmender Schneckendrehzahl erhöhte Förderleistung wird durch eine Steigerung der Rückläufe der Mischung durch den Ringspalt 14 kompensiert. Der gute Wärmeübergang innerhalb der Rückführung führt erneut zur Konstanthaltung der Verarbeitungstemperatur.

Bei der in Fig. 8 gezeigten Einrichtung erfolgt die Ruß- und Ölzugabe über den Einfülltrichter 27 und die Dispergierung dieser Bestandteile erfolgt in dem ZE 21, der wiederum mit einem, den freien Querschnitt der Austrittsöffnung 28 regelnden Schiebar 29 ausgerüstet ist.

Der Schiebar 29 wird mittels eines Hydraulikzylinders 30 aufgrund der durch das Druckmeßgerät 31 ermittelten Werte durch Regelgerät 32 gesteuert.

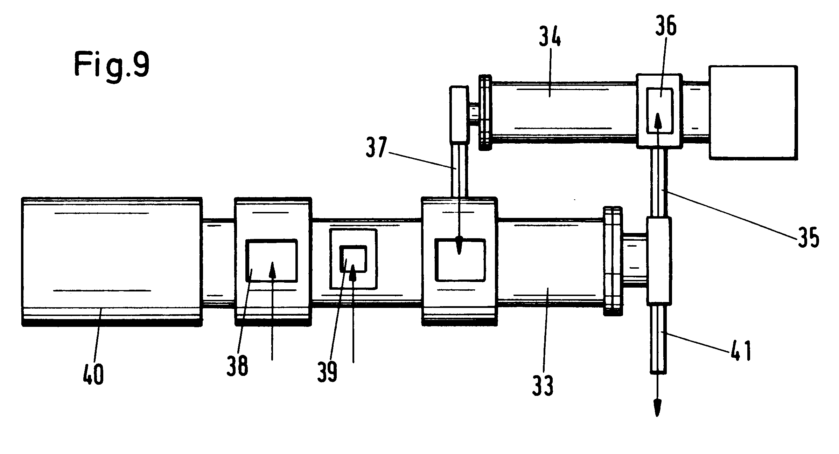

Bei der in Fig. 9 gezeigten Ausführungsform werden zwei ZE 33, 34 nebeneinander angeordnet.

Der ZE 34 übernimmt die Funktion des Ringspaltes 14, wie gezeigt in den Fig. 2 bis 3 und 8.

Der ZE ist über Rohrleitungen 35 mit dem als Rückführungsraum ausgebildeten Extrusionsraum dieses Extruders verbunden, und zwar an der Eingangsseite 36 dieses ZE's sowie über Rohrleitung 37 mit dem Eingang des ZE's 33.

Der Extruder 33 weist eine erste Einspeiseöffnung 38 für den zerkleinerten Kautschuk und eine Einspeiseöffnung 39 für den Füllstoff, den Weichmacher und weitere Verarbeitungshilfsstoffe auf. Mittels Getriebe und Antrieb 40 werden die nicht dargestellten Schnecken in Drehbewegung gesetzt und leisten die Mastizier-, Förder- und Homogenisierarbeit.

Auch bei dieser Ausführungsform wird bis zu einem Zwanzigstel des eingespeisten Mischungsvolumens zunächst durch eine Schließung der Austrittsöffnung 41 in den Rückstauraum, d.h. inden ZE 34, gefördert, dessen ebenfalls nicht gezeigte Schnecken eine Rückförderung der Mischung durch die Rohrleitung 37 vornehmen.

Im dem Extruder 34 wird die Kautschukmischung ebenfalls gekühlt durch übliche, nicht gezeigte Bohrungen, an denen ein Temperiergerät angeschlossen ist. Danach wird der Mischungsstrom durch Rohrleitung 37 dem ersten ZE 33 wieder zugeführt.

Da nur etwa ein Zwanzigstel der Mischung durch die Austrittsöffnung 41 kontinuierlich abgegeben wird, rotieren etwa 19/20 der Mischung in der Anlage, wodurch eine sehr intensive Längs- und Quermischung sowie Dispergierung erreicht wird, ohne daß es zu thermischen Belastungen kommt, weil in dem ZE 34 ein große Kühlfläche durch Kühlung des Gehäuses und einer Innenkühlung der Schnecken dieses Extruders zur Verfügung steht.

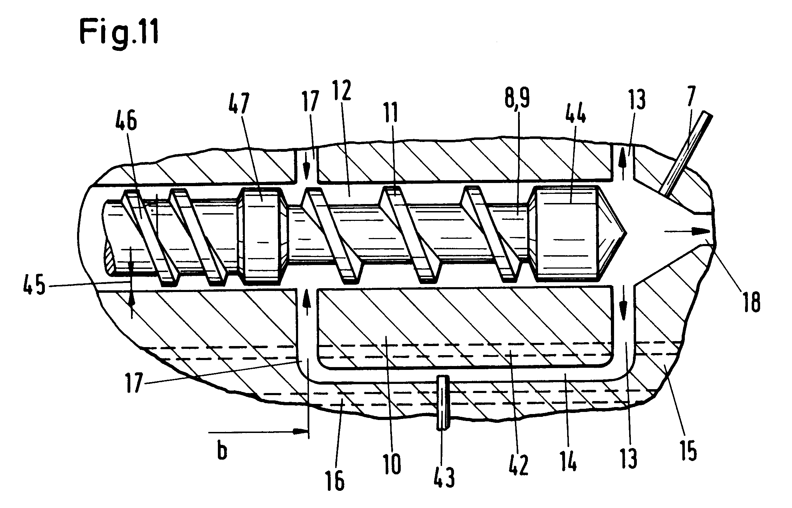

Bei der in Fig. 11 gezeigten Ausführungsform ist eine andere Schneckengeometrie des ZE's gewählt worden. Im Bereich "b" weisen die Schnekken 8, 9 Stege mit einer größeren Steigung 46 gegenüber der Stegsteigung in diesem Bereich in Fig. 1 auf, wodurch gezielt auf die Fördergeschwindigkeit im Bereich "b" eingegangen werden kann. Am Ende des Bereichs "b" ist auf der Schnecke ein Blister 47 angeordnet, der einen relativ geringen Spalt zwischen dem Blister 47 und dem Zylinderinnenmantel freiläßt. Beim Passieren des Materials über den Blister 47 erfolgt eine intensive Scherung und Homogenisierung.

Der Kerndurchmesser der Schnecken 8, 9 des ZE's wurde im Bereich "b" vergrößert, so daß die Gangtiefe 45 verringert wird. Durch diese Maßnahme ist ein erhöhter Materialdruck einstellbar, der die Scherung des Materials über den Blister 47 begünstigt.

Um die Scherwirkung noch zu verbessern, kann auch am Ende der Schnecken 8, 9 ein weiterer Blister 44 angeordnet sein, wodurch ebenfalls eine schnellere Homogenisierung der Mischung erreicht wird.

Gemäß der Erfindung erfolgen die Arbeitsschritte

   - Mastizieren,

- Einarbeiten der Füllstoffe und Hilfsmittel sowie
- Einarbeiten der Vernetzungsmittel

in vorzugsweise zwei hintereinandergeschalteten Zweischneckenextrudern (Fig. 8), die aufgrund der Einstellung des Rührkesselverhaltens in jeder Maschine und der intensiven Kühlung kontinuierlich betrieben werden. Damit werden auch die sonst auftretenden hohen Temperaturen ausgeschlossen.

Der Beschleuniger kann in einen den kontinuierlichen Prozeß abschließenden Einschnecken-Mischextruder eingegeben werden, so daß eine sofortige Weiterverarbeitung oder nach der entsprechenden Abkühlung eine einfache Fütterstreifenherstellung möglich ist.

Durch einen Vergleich mit dem in Fig. 10 gezeigten Verfahrensfließbild wird ersichtlich, daß das erfindungsgemäße Verfahren und die dafür jeweils eingesetzte Anlage die Forderungen verwirklicht, die auf Seite 11 der Beschreibung gestellt wurden.

## Patentansprüche

1. Verfahren zum kontinuierlichen Herstellen einer Kautschukmischung durch Mastifizieren, Dispergieren, Zudosieren und Einarbeiten der Füllstoff-, Öl-, Hilfsstoff- und Vernetzungsmittelanteile und zum thermostatisierten Homogenisieren der zugeführten Bestandteile, wobei die aus dem Extruder ausgetragene Mischungsmenge durch eine Austrittsöffnung (18) am Ende des Zweischneckenextruders (1) mittels einer, den freien Austrittsquerschnitt steuernden Einrichtung (6) kontinuierlich ausgestoßen wird,
   **dadurch gekennzeichnet,**
   daß der zerkleinerte Kautschuk in einem Zweischneckenextruder (1) mastifiziert wird,
   daß im Abstand von 1 D - 10 D (D = Schneckendurchmesser) Schneckenlänge ab Kautschukeinspeisung einzelne oder in Kombination gewählte Zuschlagsstoffanteile, wie
   　　der Hilfsstoffanteil,
   　　der Füllstoffanteil (Ruß),
   　　der Weichmacheranteil,
   　　der Vernetzungsmittelanteil
   in den Zweischneckenextruder (1) eindosiert werden,
   daß im Abstand bis 10 D Schneckenlänge ab Zuschlagsstoffeindosierung bis zum 20-fachen der aus dem Extruder (1) ausgetragenen Mischungsmenge von der übrigen Mischung separiert und einem mit der Eingangsseite des Zweischneckenextrusionsraumes (12) in Verbindung stehenden Rückführungsraum (13) zugeführt wird,
   daß die Mischung in dem Rückführungsraum (13) einer intensiven Kühlung unterworfen wird,

daß die Mischung nach Durchlaufen des mindestens 2 D langen Rückführungsraumes (13) engangsseitig in den Zweischneckenextrusionsraum (12) durch den Förderdruck des Zweischneckenextruders (1) zurückgepreßt wird.

2. Einrichtung zur Durchführung des Verfahrens nach Anspruch 1, bestehend aus einem ZE (Zweischneckenextruder) mit gleich- oder gegensinnig umlaufenden, miteinander kämmenden Schnecken, mit zwei Einspeisetrichtern, denen Dosiereinrichtungen zugeordnet sind und einer Austrittsöffnung für die Kautschukmischung, wobei in der Austrittsöffnung (18) des Zweischneckenextruders (1) eine den freien Querschnitt in Abhängigkeit von dem Druck im ZE-Extrusionsraum steuernde Einrichtung (5, 6, 7, 29, 30, 32) angeordnet ist,
   **dadurch gekennzeichnet,**
   daß der Abstand (a) von dem ersten (2) zum zweiten Einspeisetrichter (3) bis zu 10 D (D = Schneckendurchmesser) Länge bemessen ist,
   daß etwa vor der Austrittsöffnung (18) des ZE-Extrusionsraumes (12) beginnende, radial nach außen in einen zylindermantelförmigen Raum (14) einmündende Rückführungskanäle (13) oder Schlitze angeordnet sind,
   daß der zylindermantelförmige Raum (14) koaxial um das Gehäuse des ZE's angeordnet ist und sich mindestens über 2 D-Länge stromaufwärts erstreckt,
   daß der zylindermantelförmige Raum (14) temperierbar (16, 42) ausgebildet ist,
   daß der zylindermantelförmige Raum (14) mit radial zum ZE-Extrusionsraum zurückführenden Kanälen (17) oder Schlitzen verbunden ist.

3. Einrichtung nach Anspruch 2,
   **dadurch gekennzeichnet,**
   daß die Außenwandung des zylindermantelförmigen Rückführungsraumes (14) gebildet wird durch einen drehbar und antreibbar ausgebildeten Zylindermantel (50),
   daß in der Innenfläche (51) des Zylindermantels (50) wendelförmige, im Querschnitt halbrunde oder rechteckig ausgebildete Nuten (52) eingeformt sind,
   daß die wendelförmigen Nuten (52) eine stromaufwärts (53) gerichtete Materialrückförderung bewirkende Steigung (54) aufweisen,
   daß radial vom zylindermantelförmigen Raum (14) zum ZE-Extrusionsraum (12) zurückführende Kanäle (17) vorgesehen werden und
   daß eine Einrichtung (5, 6, 7) an der Austrittsöffnung (18) des Zweischneckenextruders, die den freien Querschnitt in Abhängigkeit von dem Druck im ZE-Extrusionsraum steuert, angeordnet ist.

4. Einrichtung nach Anspruch 3,
**dadurch gekennzeichnet,**
daß der Zylindermantel (50) eine Außenverzahnung (55) aufweist,
daß in die Außenverzahnung (55) Ritzel (56) eingreifen,
daß an die Antriebswelle (57) der Ritzel (56), ein Getriebe (60) und ein Antrieb angeschlossen sind.

5. Einrichtung nach den Ansprüchen 3 und 4,
**dadurch gekennzeichnet,**
daß das an die Welle (57) angeschlossene Getriebe (60) eine stufenlos verstellbare Abtriebswelle (61) aufweist, und
daß die Abtriebswelle (61) rechts und links drehend antreibbar ausgebildet ist.

6. Einrichtung nach Anspruch 3,
**dadurch gekennzeichnet,**
daß Nuten (52) axial zur Achse der Schnecken (8, 9) angeordnet sind.

7. Einrichtung nach Anspruch 3,
**dadurch gekennzeichnet,**
daß die Nuten (52) in einem Steigungswinkelbereich von 0 - 90°, gerechnet von einer senkrechten Linie (59), angeordnet sind.

8. Einrichtung nach Anspruch 3,
**dadurch gekennzeichnet,**
daß die nebeneinanderliegenden, wendelförmigen Nuten (52) abwechselnd eingangsseitig geschlossen (52a) und ausgangsseitig (52b) geöffnet,
daß die benachbarte Nut eingangsseitig geöffnet (52c) und ausgangsseitig (52d) geschlossen ist, und
daß die nebeneinander liegenden Stege zwischen den Nuten (52) abwechselnd in ihrer Höhe unterschiedlich ausgebildet sind.

9. Einrichtung nach Anspruch 2,
**dadurch gekennzeichnet,**
daß der Rückführungsraum für die Kautschukmischung als zweiter kühlbarer Extruder (34) ausgebildet ist, der mit seiner Eingangsseite (36) über Verbindungsrohre (35) mit der stromabwärtigen Rückführungskanalöffnung des ZE-Extrusionsraumes und dessen Austrittsöffnung über Verbindungsrohre (37) mit den stromaufwärtigen Rückführungskanaleingängen des ZE-Extrusionsraumes verbunden ist.

10. Einrichtung nach einem der Ansprüche 2 bis 9,
**dadurch gekennzeichnet,**
daß die Austrittsöffnung (18, 24) und/oder die Verbindungsrohre (37) als Kapillare (25) mit eingebauten Kapillarviskosimetern (26) ausgebildet sind.

11. Einrichtung nach den Ansprüchen 2 bis 10,
**dadurch gekennzeichnet,**
daß die Schnecken (Fig. 7) im Einzugs- und Dosierteil eine gegenüber dem Homogenisierteil verringerte Gangtiefe (45) und/oder Stegsteigung (46) aufweisen.

12. Einrichtung nach den Ansprüchen 2 bis 11,
**dadurch gekennzeichnet,**
daß die Schnecke (8, 9) im Homogenisierabschnitt (b) eine Scherung ausübende Teile, z. B. Blister (47), Scherstege oder dergleichen aufweist.

13. Einrichtung nach den Ansprüchen 2 bis 12,
**dadurch gekennzeichnet,**
daß am Ende der Schnecke und/oder des Homogenisierabschnittes (b) ein stegloses blisterförmiges, eine Scherung bewirkendes Teil (44) angeordnet ist.

14. Einrichtung nach Anspruch 2,
**dadurch gekennzeichnet,**
daß in den Raum (14) von außen verstellbare Stifte (43) radial hineinragen.

**Claims**

1. Method for the continuous production of a rubber-containing mixture by masticating, dispersing, metering and incorporating the proportions of filler material, oil, auxiliary substance and cross-linking agent, and for the thermostatic homogenizing of the constituents supplied, wherein the quantity of mixture discharged from the extruder is continuously ejected through an outlet aperture (18) at the end of the twin-screw extruder (1) by means of a device which controls the free outlet cross-section, characterised in that the pulverized rubber is masticated in a twin-screw extruder (1), in that individual proportions of additives, or selected combinations thereof, such as the proportion of auxiliary substance, the proportion of filler material (carbon black), the proportion of softener and the proportion of cross-linking agent, are metered and fed into the twin-screw extruder (1) at a distance of from 1 D to 10 D (D = diameter of screw) of the length of the screw from the feed of the rubber, in that up to 20 times the quantity of the mixture discharged from the extruder (1) is separated from the rest of the mixture at a distance of up to 10 D of the length of the screw from the feed of the additive and is supplied to a return chamber (13) connected to the inlet end of the twin-screw extrusion chamber (12), in that the mixture is subjected to intensive cooling in the return chamber (13), and in that the mixture is pressed back into the inlet end of the twin-screw extrusion chamber (12) by the feed pressure of the twin-screw extruder (1) after passing through the return chamber (13), which is at least 2 D long.

2. Apparatus for carrying out the method according to claim 1, comprising a TE (twin-screw) extruder having intermeshing screws rotating in the same or opposite directions, two feed hoppers having associated metering devices, and an outlet aperture for the rubber-containing mixture, wherein a device (5, 6, 7, 29, 30, 32), which controls the free cross-section in dependence upon the pressure in the TE extrusion chamber, is disposed in the outlet aperture (18) of the twin-screw extruder (1), characterised in that the spacing (a) between the first feed hopper (2) and the second feed hopper (3) is up to 10 D (D = diameter of screw) in length, in that return passages (13) or slots are provided which commence substantially upstream of the outlet aperture (18) of the TE extrusion chamber (12) and terminate radially outwardly into an annular chamber (14), in that the annular chamber (14) is disposed coaxially around the housing of the TE and extends upstream over a length of at least 2 D, in that the annular chamber (14) is adapted to be temperature-controllable (16, 42), and in that the annular chamber (14) is connected to passages (17) or slots which lead back radially to the TE extrusion chamber.

3. Apparatus according to claim 2, characterised in that the outer wall of the annular return chamber (14) is formed by a rotatable and drivable cylindrical casing (50), in that helical grooves (52) of semicircular or rectangular cross-section are formed in the internal surface (51) of the cylindrical casing (50), in that the helical grooves (52) have a pitch (54) which effects the return of material in an upstream direction (53), in that passages (17) are provided, which lead back radially from the annular chamber (14) to the TE extrusion chamber (12), and in that a device (5, 6, 7) is disposed at the outlet aperture (18) in the twin-screw extruder, which device controls the free cross-section in dependence upon the pressure in the TE extrusion chamber.

4. Apparatus according to claim 3, characterised in that the cylindrical casing (50) has external teeth (55), in that pinions (56) mesh with the external teeth (55), and in that a transmission unit (60) and a drive are connected to the drive shaft (57) of the pinions (56).

5. Apparatus according to claims 3 and 4, characterised in that the transmission unit (60), which is connected to the shaft (57), has an infinitely adjustable output shaft (61), and in that the output shaft (61) is adapted to be drivable so as to rotate to the right and left.

6. Apparatus according to claim 3, characterised in that grooves (52) are disposed axially relative to the axis of the screws (8, 9).

7. Apparatus according to claim 3, characterised in that the grooves (52) are disposed in a range of pitch angles of from 0° to 90°, with respect to a perpendicular line (59).

8. Apparatus according to claim 3, characterised in that the mutually adjacent, helical grooves (52) are alternately closed at the inlet end (52a) and opened at the outlet end (52b), in that the adjacent groove is opened at the inlet end (52c) and closed at the outlet end (52d), and in that the mutually adjacent flights between the grooves (52) alternately differ in respect of their height.

9. Apparatus according to claim 2, characterised in that the return chamber for the rubber-containing mixture is adapted as a second coolable extruder (34), whose inlet end (36) is connected to the downstream return passage opening of the TE extrusion chamber by way of connecting pipes (35), and whose outlet aperture is connected to the upstream return passage inlets of the TE extrusion chamber by way of connecting pipes (37).

10. Apparatus according to one of claims 2 to 9, characterised in that the outlet aperture (18, 24) and/or the connecting pipes (37) are adapted as capillary tubes (25) with built-in capillary viscometers (26).

11. Apparatus according to claims 2 to 10, characterised in that the depth (45) of the thread and/or the pitch (46) of the flights of the screws (Fig. 7) in the feed and metering portions are smaller than those in the homogenizing portion.

12. Apparatus according to claims 2 to 11, characterised in that the screw (8,9) in the homogenizing portion (b) has parts, such as obstruction member (47), shearing flights or the like, which exert a shearing action.

13. Apparatus according to claims 2 to 12, characterised in that a flightless part (44), which is in the form of an obstruction member and effects a shearing action, is disposed at the end of the screw and/or the homogenizing portion (b).

14. Apparatus according to claim 2, characterised in that externally adjustable pins (43) extend radially into the chamber (14).

**Revendications**

1. Procédé pour la réalisation continue d'un mélange pour caoutchouc par mastication, dispersion, dosage et ajout et incorporation de portions de charge, d'huile, d'adjuvant et d'agent de réticulation, et procédé d'homogénéisation, par voie thermostatique, des constituants amenés, procédé dans lequel le débit de mélange qui sort de l'extrudeuse est poussé à travers une ouverture de sortie (18) située à la fin de l'extrudeuse à double vis (1) au moyen d'un dispositif (6) qui commande la section libre de sortie,

     procédé caractérisé,

     par le fait que le caoutchouc broyé est mastiqué dans une extrudeuse (1) à double vis,

     par le fait qu'à une distance de 1 D - 10 D (D = diamètre de la vis) sur la longueur de la vis à partir de l'introduction du caoutchouc, différentes portions de produits d'addition, individuellement ou en combinaison, comme

     la portion d'adjuvant,

     la portion de charge (noir de carbone),

     la portion de plastifiant,

     la portion d'agent de réticulation,

sont dosées et introduites dans l'extrudeuse à double vis (1),

     par le fait qu'à une distance allant jusqu'a 10 D sur la longueur de la vis à partir de l'introduction des produits d'addition, on sépare d'avec le reste du mélange jusqu'à 20 fois le débit de mélange sortant de l'extrudeuse (1), ce que l'on amène à une chambre de recyclage (13) qui est reliée avec le côté de l'entrée de la chambre d'extrusion (12) de l'extrudeuse à double vis,

     par le fait que dans la chambre de recyclage (13), le mélange est soumis à un refroidissement intensif,

     par le fait qu'après avoir parcouru la chambre de recyclage (13), sur une longueur d'au moins 2D, le mélange est refoulé du côté de l'entrée dans la chambre d'extrusion (12) de l'extrudeuse à double vis par la pression de transport de l'extrudeuse à double vis (1).

2. Installation pour la mise en oeuvre du procédé selon la revendication 1, constituée d'une extrudeuse à double vis avec vis engrenant l'une avec l'autre et tournant de même sens ou de sens contraire, avec deux entonnoirs d'introduction auxquels correspondent des dispositifs de dosage et avec une ouverture de sortie pour le mélange de caoutchouc, étant précisé que dans l'ouverture de sortie (18) de l'extrudeuse à double vis (1) est disposé un dispositif (5,6,7,29,32) qui commande la section libre en fonction de la pression régnant dans la chambre d'extrusion de l'extrudeuse à double vis,

     installation caractérisée

     par le fait que la distance (a) entre le premier (2) et le second (3) entonnoirs d'introduction mesure jusqu'à 10 D (D = diamètre de la vis) de longueur,

     par le fait que sont disposés des canaux (13) ou des fentes de retour pour recyclage commençant un peu avant l'ouverture de sortie (18) de la chambre d'extrusion (12) de l'extrudeuse à double vis et débouchant radialement vers l'extérieur dans une chambre (14) en forme d'enveloppe cylindrique,

     par le fait que la chambre (14) en forme d'enveloppe cylindrique est disposée coaxialement autour du carter de l'extrudeuse à double vis et s'étend vers l'amont sur une longueur d'au moins 2D,

     par le fait que la chambre (14) en forme d'enveloppe cylindrique est conçue pouvant être refroidie (16,42),

     par le fait que la chambre (14) en forme d'enveloppe cylindrique est reliée à des canaux (17) ou à des fentes qui conduisent radialement vers la chambre d'extrusion de l'extrudeuse à double vis.

3. Installation selon la revendication 2,

     caractérisée

     par le fait que la paroi extérieure de la chambre de retour pour recyclage (14) en forme d'enveloppe cylindrique est formée par une enveloppe cylindrique (50) prévue rotative et pouvant être entraînée.

     par le fait que dans la surface intérieure (51) de l'enveloppe cylindrique (50) sont venues de forme des encoches (52) en forme d'hélice et de section semi-ronde ou rectangulaire,

par le fait que les encoches en forme d'hélice (52) présentent une inclinaison (54) qui opère un rétro-transport du matériau en direction de l'amont (53),

par le fait que sont prévus des canaux (17) qui vont radialement de la chambre (14) en forme d'enveloppe cylindrique à la chambre d'extrusion (12) de l'extrudeuse à double vis, et

par le fait qu'à l'ouverture de sortie (18) de l'extrudeuse à double vis est disposé un dispositif (5,6,7) qui pilote la section libre en fonction de la pression régnant dans la chambre d'extrusion de l'extrudeuse à double vis.

4.	Installation selon la revendication 3, caractérisée

par le fait que l'enveloppe cylindrique (50) présente une denture extérieure (55),

par le fait que dans la denture extérieure (55) engrènent des pignons (56),

par le fait qu'un arbre d'entraînement (57) des pignons (56) sont reliés à un mécanisme réducteur (60) et à un mécanisme d'entraînement.

5.	Installation selon les revendications 3 et 4, caractérisée

par le fait que le mécanisme réducteur (60) relié à l'arbre (57) présente un arbre de sortie (61) réglable en continu et

par le fait que l'arbre de sortie (61) est prévu pouvant être entraîné en rotation vers la droite et vers la gauche.

6.	Installation selon la revendication 3, caractérisée

par le fait que des encoches (52) sont disposées axialement par rapport à l'axe des vis (8,9).

7.	Installation selon la revendication 3, caractérisée

par le fait que les encoches (52) sont disposées sur une plage d'angle d'hélice de 0 - 90°, calculé par rapport à une verticale (59).

8.	Installation selon la revendication 3, caractérisée

par le fait que les encoches (52) en forme d'hélice, situées les unes à côté des autres, sont alternativement fermées (52a) du côté de l'entrée et ouvertes (52b) du côté de la sortie,

par le fait que l'encoche voisine est ouverte (52c) du côté de l'entrée et fermée du côté de la sortie (52d) et

par le fait que les filets situés les uns à côtés des autres entre les encoches (52) sont alternativement prévus de hauteur différente.

9.	Installation selon la revendication 2, caractérisée

par le fait que la chambre de retour pour recyclage pour le mélange pour caoutchouc est conçue sous forme d'une seconde extrudeuse (34) qui peut être refroidie et qui, par son côté entrée (36), est reliée, par l'intermédiaire de tubes de liaison (35), avec l'ouverture du canal de retour pour recyclage, côté aval, de la chambre d'extrusion de l'extrudeuse à double vis et, par son ouverture de sortie, elle est reliée, par l'intermédiaire de tubes de liaison (37), avec les entrées du canal de retour pour recyclage, côté amont, de la chambre d'extrusion de l'extrudeuse à double vis.

10.	Installation selon l'une des revendications 2 à 9, caractérisée

par le fait que l'ouverture de sortie (18,24) et/ou les tubes de liaison (37) sont conçus sous forme de capillaires (25) avec viscosimètres capillaires (26) intégrés.

11.	Installation selon les revendications 2 à 10, caractérisée

par le fait que les vis (figure 7) présentent, dans leur portion introduction et dans leur portion dosage, une profondeur de filet (45) et/ou une inclinaison d'hélice (46) réduites par rapport à leur portion d'homogénéisation.

12.	Installation selon les revendications 2 à 11, caractérisée

par le fait que la vis (8,9) présente, dans sa portion d'homogénéisation (b), des parties exerçant un cisaillement, par exemple des obstacles (47), des filets de vis de cisaillement ou analogues.

13.	Installation selon les revendications 2 à 12, caractérisée

par le fait qu'à la fin de la vis et/ou de la portion d'homogénéisation (b) est disposée une partie (44) en forme d'obstacle sans filet de vis, opérant un cisaillement.

14.	Installation selon la revendication 2, caractérisée

par le fait que des tiges (43), réglables de l'extérieur, pénètrent radialement dans la chambre 14.

Fig.1

Fig.2

Fig.3

Fig.4

Fig.6

Fig.5

## Fig.7

Fig.8

Fig.9

Polymerbasis in Ballenform | Verarbeitungshilfsmittel | Füllstoff | Weichmacher | Andere Hilfsstoffe | Vernetzungsmittel | Beschleuniger

Zerkleinern

Mastizieren

Füllstoff, Weichmacher evtl. auch andere Hilfsstoffeinarbeitung

Einarbeitung des Vernetzungsmittels, evtl. auch andere Hilfsstoffe oder sogar des gesamten Vernetzungssystems

Einarbeitung des Beschleunigers

50

Grundmischung

Fertigmischung

Fig.10
STAND DER TECHNIK

EP 0 305 692 B1

Fig.11

EP 0 305 692 B1